# DEMANDE DE BREVET EUROPEEN

(11) **EP 3 196 060 A1**
(43) Date de publication de la demande: **26.07.2017**
(21) Numéro de dépôt: 17152130.5
(22) Date de dépôt: 19.01.2017
(51) Int. Cl.: B60H 1/00

(54) **ENSEMBLE FORMANT VOLET POUR SYSTÈME DE CHAUFFAGE, VENTILATION ET/OU CLIMATISATION ET SYSTÈME COMPRENANT LEDIT ENSEMBLE FORMANT VOLET**

(30) Priorité: 22.01.2016 FR 1650523
(71) Demandeur: Valeo Systemes Thermiques, 78320 Le Mesnil Saint Denis (FR)
(72) Inventeur: SANTOMO, Renato, 13214-695 JUNDIAI (BR); LIMA, Paulo Eduardo Gomes, 13219-708 JUNDIAI (BR); VICENTINE, Arnaldo Wanderley, 13253-550 ITATIBA (BR); COSTA, Adnam Carlos, 13253-550 ITATIBA (BR); SANTOS, Alfredo Aurelio, 13846-048 MOGI GUACU (BR)
(74) Mandataire: Metz, Gaëlle

(57) **Abrégé**

L'invention concerne un ensemble formant volet pour un système de distribution d'air d'un système de chauffage, ventilation et/ou climatisation (CVC) d'un véhicule, adapté pour obturer sélectivement au moins un orifice de sortie d'un réservoir d'air du système CVC, l'ensemble formant volet comprenant un volet principal adapté pour être couplé à un moyen d'entraînement pour faire tourner l'ensemble formant volet à l'intérieur du réservoir d'air entre une première position d'obturation de l'au moins un orifice de sortie et une deuxième position d'ouverture de l'au moins un orifice de sortie, l'ensemble formant volet comprenant en outre un volet de compression adapté pour se déplacer par rapport au volet principal pendant la rotation de l'ensemble formant volet entre sa première position et sa deuxième position, le volet de compression comprenant au moins un moyen d'actionnement adapté pour coopérer avec au moins un élément de guidage positionné à l'intérieur du réservoir d'air et adapté pour entrer en prise avec l'au moins un moyen d'actionnement.

## Description

### Domaine de l'invention

La présente invention concerne un ensemble formant volet pour un ensemble de distribution d'air d'un système de chauffage, ventilation et/ou climatisation (CVC) d'un véhicule, l'ensemble formant volet étant adapté pour obturer de manière sélective au moins un orifice de sortie du réservoir d'air du système CVC. L'invention concerne également un système CVC comprenant un tel ensemble formant volet.

### Arrière-plan de l'invention

L'invention concerne un système CVC qui est le module utilisé dans un véhicule pour climatiser l'air envoyé dans l'habitacle du véhicule. Le rôle principal d'un système CVC est de garantir le confort climatique des occupants de l'habitacle du véhicule par traitement de l'air envoyé dans l'habitacle du véhicule et de garantir que la visibilité à travers les fenêtres de l'habitacle est optimisée pendant l'utilisation du véhicule. Un système CVC est responsable du traitement et de la distribution de l'air sur les différentes parties de l'habitacle du véhicule et remplit la fonction de production de froid au moyen d'une boucle de climatisation.

Certains des composants principaux d'un système CVC comprennent un ventilateur, un moteur de ventilateur, un évaporateur, un radiateur de chauffage, un condenseur, un compresseur, une soupape de détente, une tuyauterie et un carter pour recevoir les différents composants. Le carter d'un système CVC comprend normalement une variété de volets pour permettre une distribution correcte de l'air du système CVC vers différents orifices de sortie qui sont raccordés à des gaines de distribution de l'air dans différentes parties de l'habitacle du véhicule.

Le carter d'un système CVC comprend typiquement au moins un réservoir d'air qui est utilisé pour collecter et/ou mélanger de l'air pour obtenir un air ayant des caractéristiques déterminées pour le transférer vers l'habitacle du véhicule. Le réservoir d'air est typiquement de forme cylindrique et est pourvu d'un certain nombre d'orifices de sortie, qui sont chacun adaptés pour un mode de fonctionnement spécifique du système CVC. L'un des orifices de sortie est, par exemple, un orifice de sortie de dégivrage qui est utilisé pour dégivrer et désembuer les fenêtres d'un véhicule pour permettre une meilleure visibilité et une sécurité améliorée. D'autres orifices de sortie comprennent un orifice de sortie d'aération et un orifice de sortie de plancher. Pour permettre la sélection d'un orifice de sortie pour un mode de fonctionnement préféré du système CVC, le réservoir d'air du système CVC comprend un volet ou une variété de volets pour la fermeture sélective des orifices de sortie qui ne sont pas utilisés.

Dans la technique antérieure, il est connu d'utiliser à l'intérieur du réservoir d'air d'un système CVC, un volet tambour ou cylindrique ayant un corps de volet adapté pour coopérer avec la paroi intérieure de forme essentiellement cylindrique du réservoir d'air.

Le volet tambour ou cylindrique est positionné à l'intérieur du réservoir d'air pour pouvoir tourner à l'intérieur du réservoir d'air entre une première position pour la fermeture d'au moins un orifice de sortie qui n'est pas utilisé, et une deuxième position dans laquelle ledit orifice de sortie est ouvert. Il est possible que le volet tambour ou cylindrique soit adapté pour obturer une variété d'orifices de sortie, où un seul d'une pluralité d'orifices de sortie est ouvert pour permettre l'utilisation du seul orifice de sortie ouvert dans un mode de fonctionnement spécifique du système CVC, ayant les autres orifices de sortie fermés.

Selon la technique antérieure, le volet tambour ou cylindrique qui est utilisé à l'intérieur du réservoir d'air ne dispose d'aucun aménagement spécifique pour améliorer l'étanchéité entre la paroi intérieure du réservoir d'air et la surface coopérante du volet tambour ou cylindrique. L'absence d'une telle étanchéité spécifique a pour effet qu'il existe un certain degré de fuite. Cela signifie qu'une certaine quantité d'air sortira des orifices de sortie qui ne sont pas utilisés et qui devaient être fermés au moyen du volet tambour ou cylindrique.

La raison de l'acceptation d'un certain niveau de fuite réside dans le fait que le volet tambour ou cylindrique se déplace entre ses différentes positions par l'intermédiaire d'un axe de rotation qui coïncide essentiellement avec un axe longitudinal du réservoir d'air du système CVC. Lors de la rotation du volet tambour ou cylindrique, la surface extérieure du volet tambour ou cylindrique sera en contact avec la paroi intérieure du réservoir d'air. Cela signifie que la rotation du volet tambour ou cylindrique générera une certaine quantité de frottement entre les surfaces en regard du réservoir d'air et du volet tambour ou cylindrique.

Pour améliorer la capacité du volet tambour ou cylindrique à obturer les orifices de sortie non utilisés, la force de contact dudit volet tambour ou cylindrique contre la paroi intérieure du réservoir d'air devrait être augmentée. Cependant, une augmentation de la force de contact du volet tambour ou cylindrique contre la paroi intérieure du réservoir d'air augmenterait également le frottement généré entre les surfaces en regard pendant le déplacement du volet tambour ou cylindrique à l'intérieur du réservoir d'air.

Dans la pratique, un certain compromis est accepté, dans lequel la capacité d'étanchéité du volet tambour ou cylindrique est suffisante pour obturer en grande partie les orifices de sortie non utilisés, tandis qu'en même temps, le niveau de frottement entre la surface extérieure du volet tambour ou cylindrique et la paroi intérieure du réservoir d'air est d'un niveau acceptable.

Un problème apparenté lié à la présence de frottement entre la surface extérieure du volet tambour ou cylindrique et la paroi intérieure du réservoir d'air est la production de bruit lorsque le volet tambour ou cylindrique est déplacé entre ses positions.

Pour pouvoir améliorer le fonctionnement d'un système CVC, il apparaît nécessaire d'améliorer l'étanchéité des orifices de sortie non utilisés dans le réservoir d'air d'un système CVC tout en permettant en même temps au volet tambour ou cylindrique de se déplacer entre ses positions à l'intérieur du réservoir d'air sans excéder :
- un niveau déterminé de frottement entre la paroi extérieure du volet tambour ou cylindrique et la paroi intérieure du réservoir d'air, et
- un niveau de bruit déterminé.

### Résumé de l'invention

Un objet de la présente invention réside donc dans la mise à disposition d'un ensemble formant volet mobile pour la fermeture sélective d'orifices de sortie non utilisés dans au moins un réservoir d'air d'un système CVC, tout en évitant un niveau élevé de frottement entre l'extérieur dudit ensemble formant volet et la paroi intérieure de l'au moins un réservoir d'air pendant le déplacement dudit ensemble formant volet.

Plus particulièrement, la présente invention concerne un ensemble formant volet pour un ensemble de distribution d'air d'un système de chauffage, ventilation et/ou climatisation (CVC) d'un véhicule, adapté pour obturer sélectivement au moins un orifice de sortie d'un réservoir d'air du système CVC, où l'ensemble formant volet comprend un volet principal adapté pour être couplé à un moyen d'entraînement pour faire tourner l'ensemble formant volet à l'intérieur du réservoir d'air entre une première position d'obturation d'au moins un orifice de sortie et une deuxième position d'ouverture de l'au moins un orifice de sortie, l'ensemble formant volet comprenant en outre un volet de compression adapté pour se déplacer par rapport au volet principal pendant la rotation de l'ensemble formant volet entre sa première position et sa deuxième position, le volet de compression comprenant au moins un moyen d'actionnement adapté pour coopérer avec au moins un élément de guidage positionné à l'intérieur du réservoir d'air et adapté pour entrer en prise avec l'au moins un moyen d'actionnement, l'au moins un moyen d'actionnement et l'au moins un élément de guidage étant adaptés pour déplacer le volet de compression en direction de la paroi intérieure du réservoir d'air dans ladite première position de l'ensemble formant volet pour l'obturation de l'au moins un orifice de sortie et pour écarter le volet de compression de la paroi intérieure du réservoir d'air pendant au moins une partie de la rotation de l'ensemble formant volet de sa première position vers sa deuxième position.

Un effet de ces mesures réside dans le fait que, grâce à l'écartement du volet de compression de la paroi intérieure du réservoir d'air, le niveau de frottement entre l'ensemble formant volet et la paroi intérieure du réservoir d'air peut être réduit pendant la rotation de l'ensemble formant volet.

L'ensemble formant volet peut être couplé à un moyen d'entraînement adapté pour faire tourner l'ensemble formant volet entre une position de fermeture d'un orifice de sortie et une position d'ouverture dudit orifice de sortie, de façon que seule une partie de l'ensemble formant volet soit déplacée par rapport à la paroi intérieure du réservoir d'air pour améliorer l'étanchéité à la position de fermeture et pour limiter le frottement pendant la rotation de l'ensemble formant volet vers une position de non-fermeture.

Cela signifie que la plus grande partie de l'ensemble formant volet peut être fixée d'une manière appropriée à une position déterminée à l'intérieure du réservoir d'air. Seul le volet de compression sera fixé de manière mobile, pour permettre son déplacement par rapport au reste de l'ensemble formant volet.

Cela permet l'obtention d'une position bien définie de l'ensemble formant volet à n'importe laquelle de ces positions.

Selon une forme de réalisation de l'invention, le volet de compression comprend un élément d'étanchéité prévu sur la surface dirigée vers l'extérieur du volet de compression.

La présence d'un élément d'étanchéité indépendant sur la surface dirigée vers l'extérieur du volet de compression a pour effet que le matériau utilisé pour le volet de compression peut être choisi de manière à optimiser le couplage et la mobilité du volet de compression par rapport au volet principal. Le matériau et la forme de l'élément d'étanchéité peuvent être choisis de manière à optimiser la capacité de l'ensemble formant volet pour l'obturation de l'au moins un orifice de sortie.

Selon une forme de réalisation de l'invention, l'élément d'étanchéité comprend un matériau flexible, tel que du caoutchouc ou du caoutchouc synthétique.

Selon une forme de réalisation de l'invention, le volet principal comprend un corps principal adapté pour être positionné au voisinage de la paroi intérieure du réservoir d'air, le corps principal étant pourvu, à ses extrémités opposées, d'un premier et d'un deuxième bras, s'étendant essentiellement perpendiculairement par rapport au corps principal, les bras comprenant des moyens de couplage pour coupler le volet principal à un axe de rotation.

Selon une forme de réalisation de l'invention, l'élément de volet du volet de compression comprend à ses extrémités opposées un premier et un deuxième bras adaptés pour être positionnés le long des premier et deuxième bras du volet principal, les bras du volet principal et les bras du volet de compression comprenant, respectivement, un ensemble de guide et suiveur de guide destiné à coupler à coulissement le volet de compression au volet principal.

Selon une forme de réalisation, l'ensemble de guide et suiveur de guide comprend au moins un guide s'étendant radialement, pour permettre au volet de compression de se déplacer dans une direction radiale par rapport au volet principal.

Ces mesures ont pour effet que le volet principal et le volet de compression sont adaptés pour guider le volet de compression dans une direction radiale par rapport au volet principal. Cela signifie que, pendant le déplacement du volet de couplage par rapport au volet principal, l'orientation angulaire du volet de compression et, s'il y en a un, l'orientation angulaire de l'élément d'étanchéité fixé sur la surface dirigée vers l'extérieur du volet de compression par rapport à la paroi intérieure du réservoir d'air.

Selon une forme de réalisation de l'invention, les bras du volet principal sont en forme de part de tarte.

Selon une forme de réalisation de l'invention, ledit au moins un moyen d'actionnement comprend au moins une partie saillante adaptée pour coopérer avec au moins un guide prévu sur la paroi intérieure du réservoir d'air.

Selon une forme de réalisation de l'invention, le premier bras du volet de compression comprend une première partie saillante adaptée pour coopérer avec un premier guide prévu sur la paroi intérieure du réservoir d'air et dans lequel le deuxième bras du volet de compression comprend une deuxième partie saillante adaptée pour coopérer avec un deuxième guide prévu sur la paroi intérieure du réservoir d'air.

Selon une forme de réalisation de l'invention, le corps principal du volet principal comprend au moins une partie saillante dirigée vers l'extérieur, le volet de compression comprenant au moins un évidement pour la réception de l'au moins une partie saillante, l'au moins une partie saillante du volet principal et l'au moins un évidement du volet de compression étant adaptés pour délimiter le déplacement en rotation du volet de compression par rapport au volet principal pendant le déplacement du volet de compression par rapport à la paroi intérieure du réservoir d'air.

Ces mesures ont pour effet que la partie saillante du volet principal et l'évidement formé dans le volet de compression sont adaptés pour guider le volet de compression dans une direction radiale par rapport au volet principal. Cela signifie que la combinaison de la partie saillante et de l'évidement constitue un moyen supplémentaire de garantir, pendant le déplacement du volet de couplage par rapport au volet principal, l'orientation angulaire du volet de compression et, s'il y en a un, l'orientation angulaire de l'élément d'étanchéité fixé sur la surface dirigée vers l'extérieur du volet de compression par rapport à la paroi intérieure du réservoir d'air.

Selon une forme de réalisation de l'invention, l'au moins un évidement forme un trou débouchant dans l'élément de volet du volet de compression.

L'invention concerne également un système CVC comprenant l'ensemble formant volet selon la présente invention.

### Brève description des dessins

Une forme de réalisation de l'invention est décrite à titre d'exemple par référence au dessin ci-joint, dans lequel :
La Figure 1 est une vue éclatée d'une forme de réalisation de l'ensemble formant volet selon l'invention ;
La Figure 2 est une vue en perspective d'une partie du carter d'un système CVC comportant un réservoir d'air, dans lequel la paroi du réservoir interne est rendue transparente pour montrer la position de l'ensemble formant volet à l'intérieur du réservoir d'air ; et
Les Figures 3 et 4 sont des vues de côté de la partie du système CVC selon la Figure 2, l'ensemble formant volet ayant une première et une deuxième positions à l'intérieur du réservoir d'air.

### Description détaillée d'une forme de réalisation de l'invention

Dans les dessins joints, une forme de réalisation préférée de l'ensemble formant volet selon la présente invention est représentée.

Dans le présent document, l'expression "orifice de sortie" est utilisée pour faire référence à une ouverture formée dans la paroi d'un réservoir d'air, adaptée pour permettre à un flux d'air de sortir d'un réservoir d'air d'un système CVC. L'expression "orifice de sortie" fait référence à la fonction consistant à permettre au flux d'air de quitter le réservoir d'air. En pratique, l'ouverture formée dans le réservoir d'air est pourvue d'un accessoire ou d'une extension pour permettre le raccordement de l'orifice de sortie à une gaine ou un guide qui est adapté pour guider l'air quittant le réservoir d'air jusqu'à une partie particulière du compartiment passagers.

Dans le présent document, il est fait référence à une "direction radiale". Les directions mentionnées dans le présent document concernent le réservoir d'air essentiellement cylindrique du CVC. Ce réservoir d'air a un axe longitudinal qui s'étend entre les parois d'extrémité du réservoir d'air. La direction radiale est définie comme une direction partant de l'axe longitudinal vers la paroi intérieure du réservoir d'air, la direction radiale étant perpendiculaire à l'axe longitudinal du réservoir d'air.

Dans le présent document, il est fait référence à un "ensemble formant volet". L'expression "ensemble formant volet" est destinée à faire référence à un certain nombre de parties de volet qui forment ensemble un volet. La forme globale de l'ensemble formant volet ressemble à une partie d'un tambour ou d'un cylindre. En raison de la forme particulière, dans l'industrie, ce type de volet est souvent appelé "volet tambour" ou volet "cylindrique". En ce qui concerne les systèmes CVC, il est également habituel d'appeler ce type de volet une "porte".

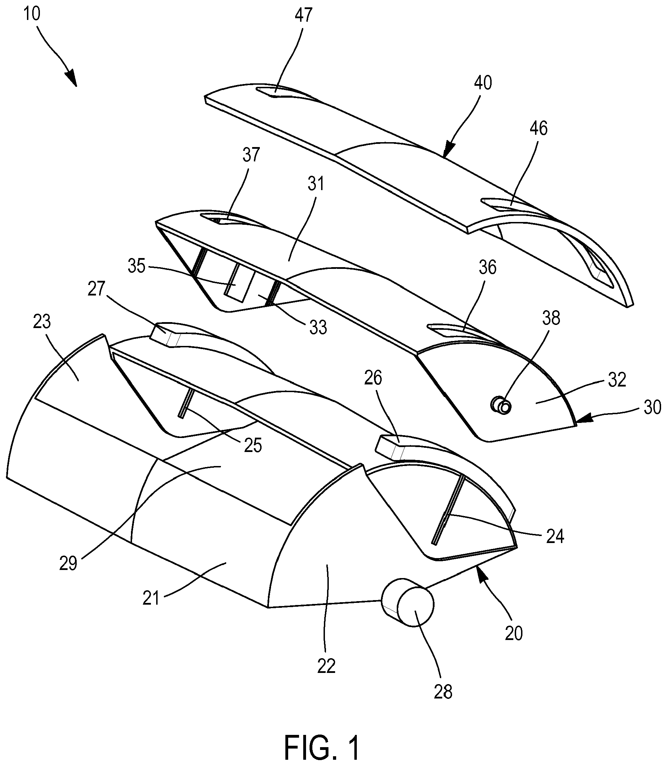

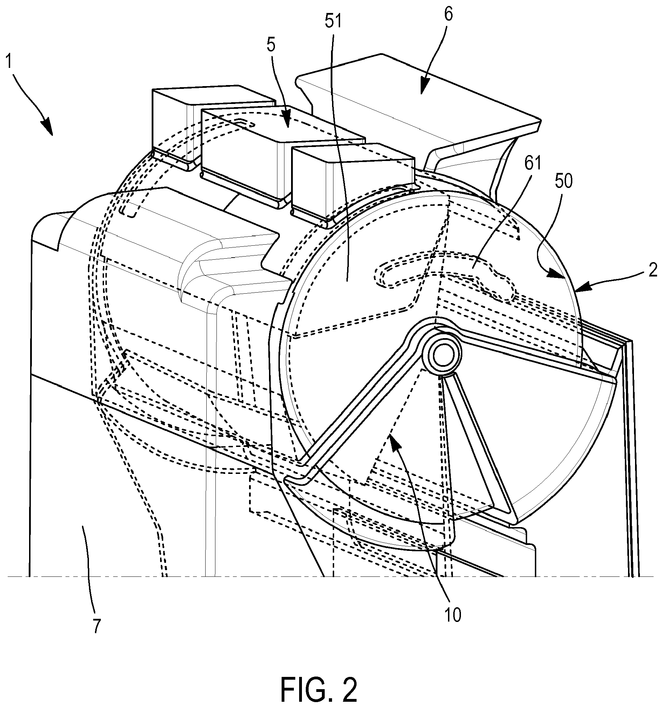

Sur la Figure 1 est représentée une forme de réalisation d'un ensemble formant volet 10 selon la présente invention. L'ensemble formant volet 10 comprend un volet principal 20 qui a essentiellement la forme d'une partie d'un tambour ou d'un cylindre. Le volet principal 20 comprend un corps principal 21 qui est façonné de façon à être positionné au voisinage de la paroi intérieure d'un réservoir d'air cylindrique 2 (voir Figure 2). Le corps principal 21 comprend une partie d'extrémité ou un bras 22 qui est pourvu d'un moyen de couplage 28 sous la forme d'une partie saillante pour permettre au volet principal 20 d'être couplé à un axe de rotation ou de former celui-ci.

Dans l'exemple de la Figure 1, le moyen de couplage 28 est de forme cylindrique et est adapté pour être reçu dans un siège de forme cylindrique dans lequel le volet principal 20 est capable de tourner par rapport à un axe de rotation défini par l'axe longitudinal du moyen de couplage de forme cylindrique 28. A l'extrémité opposée, le volet principal 20 est pourvu d'une deuxième partie d'extrémité ou bras 23, qui est également pourvu d'un moyen de couplage sous la forme d'une partie saillante (non visible sur la Figure 1). Le moyen de couplage 28 permet au volet principal 20 d'être positionné et fixé à une position déterminée à l'intérieur du réservoir d'air 2, la distance mutuelle entre le volet principal 20 et la paroi intérieure du réservoir d'air 2 (voir Figure 5) étant définie.

Le volet principal 20 est utilisé à l'intérieur d'un réservoir d'air 2 (voir Figure 2) et est adapté pour être fixé de manière rotative à l'intérieur dudit réservoir d'air 2 pour obturer sélectivement les orifices de sortie du réservoir d'air. Le volet principal 20 est capable de se déplacer entre certaines positions pour obturer au moins un orifice de sortie du réservoir d'air 2. Tel que représenté sur la Figure 1, le volet principal 20 comprend une ouverture 29 qui permet à un flux d'air de passer à travers le corps principal 21 lorsque l'ouverture 29 est alignée avec un orifice de sortie adapté pour la distribution d'air depuis l'intérieur du réservoir d'air 2 vers l'extérieur de celui-ci.

La surface extérieure du corps principal 21 est pourvue d'une première partie saillante 26 et d'une deuxième partie saillante 27 qui s'étendent depuis la surface extérieure dans une direction radiale et qui sont utilisées pour coopérer avec des éléments de volet additionnels de l'ensemble formant volet 10. Les bras 22, 23 sont chacun pourvus d'un guide s'étendant radialement 24, 25, qui sont adaptés pour coopérer avec un suiveur de guide qui est présent sur le volet de compression 30 comme il sera expliqué plus en détail ci-après.

L'ensemble formant volet 10 comprend en outre un volet de compression 30. Le volet de compression 30 a une forme essentiellement similaire à celle du volet principal 20, à savoir la forme d'une section de tambour ou de cylindre.

Le volet de compression 30 comprend un élément de volet 31 qui est de forme essentiellement cylindrique afin d'être positionné au voisinage de la paroi intérieure de forme cylindrique 50 du réservoir d'air 2 où l'ensemble formant volet 10 doit être utilisé (voir Figure 2). Les extrémités opposées de l'élément de volet 31 sont pourvues de parties d'extrémité ou bras 32, 33. Ces bras 32, 33 sont adaptés pour coopérer avec les bras 22, 23 du volet principal 20. Les bras 32, 33 sont pourvus de suiveurs de guide 34, 35 (seul le suiveur de guide 35 est visible sur la Figure 1) qui sont reçus à coulissement à l'intérieur des guides 24, 25 des bras 22, 23 du volet principal 20. Les guides 24, 25 des bras 22, 23 étant dirigés radialement, le volet de compression 30 est couplé au volet principal 20 de façon à pouvoir se déplacer dans ladite direction radiale par rapport au volet principal 20.

L'élément de volet 31 du volet de compression 30 comprend en outre un premier et un deuxième évidements 36, 37 adaptés pour recevoir des parties saillantes correspondantes 26, 27 du volet principal 20. L'ensemble de parties saillantes principales 26, 27 du volet principal 20 et les ouvertures 36, 37 du volet de compression 30 coopèrent avec les suiveurs de guide 34, 35 et les guides 24, 25 pendant un déplacement du volet de compression 30 par rapport au volet principal 20. La combinaison des guides 24, 25 et des suiveurs de guide 34, 35 délimiteront une rotation angulaire possible du volet de compression 30 par rapport au volet principal 20 pendant ledit déplacement. Cela signifie que l'orientation du volet de compression 30 à toutes les positions dudit volet de compression 30 par rapport au volet principal 20 est commandée de façon à commander l'orientation du volet de compression 30 par rapport à la paroi intérieure 50 du réservoir d'air 2. Ces mesures ont pour effet que l'orientation du volet de compression 30 est telle que la surface extérieure du compresseur 30 est correctement positionnée pour garantir une fonction d'étanchéité optimale entre le volet de compression 30 et la paroi intérieure 50 du réservoir d'air 2.

L'ensemble formant volet 10 selon la Figure 1 comprend en outre un élément d'étanchéité 40. L'élément d'étanchéité 40 est adapté pour être couplé à l'élément de volet 31 du volet de compression 30 pour réaliser sur ledit élément de volet 31 un composant ayant des caractéristiques spécifiquement adaptées pour améliorer l'étanchéité de l'ensemble formant volet 10 contre la paroi intérieure 50 d'un réservoir d'air 2 (voir Figure 2). L'élément d'étanchéité 40 pourrait être essentiellement plat et avoir une flexibilité suffisante pour permettre le couplage de l'élément d'étanchéité 40 sur l'élément de volet 31. D'une autre manière, cet élément d'étanchéité 40 pourrait avoir une forme cylindrique pour permettre une fixation correcte de l'élément d'étanchéité 40 sur l'élément de volet 31. L'élément d'étanchéité 40 est pourvu d'ouvertures 46, 47 qui sont adaptées pour coïncider avec les ouvertures 36, 37 formées dans l'élément de volet 31 du volet de compression 30. Les ouvertures 46, 47 coopèrent avec les ouvertures 36, 37 pour recevoir les parties saillantes 26, 27 du volet principal 20, et sont adaptées pour coopérer avec les ouvertures 36, 37 pour délimiter le déplacement en rotation de l'ensemble du volet de compression 30 et de l'élément d'étanchéité 40 pendant un déplacement dudit ensemble par rapport au volet principal 20. Cela sera expliqué plus en détail en liaison avec les Figures 2, 3 et 4.

L'ensemble formant volet 10 est adapté pour être reçu de manière mobile à l'intérieur d'un réservoir d'air 2. L'ensemble formant volet 10 est fixé de manière rotative à l'intérieur dudit réservoir d'air 2 par l'intermédiaire du moyen de couplage 28. De plus, l'ensemble formant volet 10 est adapté pour permettre un déplacement de l'ensemble du volet de compression 30 et d'un élément d'étanchéité 40 par rapport au volet principal 20 pendant une rotation autour d'un axe de rotation défini par ledit moyen de couplage 28. Afin d'imposer ledit déplacement de l'ensemble du volet de compression 30 et d'un élément d'étanchéité 40 par rapport au volet principal 20, le volet de compression 30 comprend une première et une deuxième parties saillantes 38, 39 sur l'extérieur du volet de compression 30. Sur la Figure 1, seule la partie saillante 38 est visible. Les parties saillantes 38, 39 sont adaptées pour coopérer avec des guides prévus à l'intérieur du réservoir d'air 2 dans lequel l'ensemble formant volet 10 est positionné.

Sur la Figure 2, une partie du carter d'un système CVC 1 est représentée en perspective. Les parois du carter sont rendues transparentes pour permettre de voir l'ensemble formant volet 10 à l'intérieur du système CVC 1. La Figure 2 montre, en particulier, un réservoir d'air 2 qui est de forme essentiellement cylindrique. Le réservoir d'air 2 est pourvu d'un certain nombre d'orifices de sortie qui sont raccordés à des gaines. Les orifices de sortie et les gaines sont adaptés pour guider l'air sortant du réservoir d'air 2 vers une partie spécifique d'un habitacle de véhicule ou du véhicule dans lequel le système CVC 1 est utilisé. Sur la Figure 2, en particulier, un orifice de sortie de ventilation 5, un orifice de sortie de dégivrage 6 et un orifice de sortie de plancher 7 sont représentés. Le terme "orifice de sortie" est utilisé pour indiquer l'ouverture formée dans la paroi du réservoir d'air 2, adaptée pour permettre à l'air de quitter le réservoir d'air 2 et de s'écouler en direction d'une gaine raccordée à l'orifice de sortie pour permettre à l'air d'être transféré vers le compartiment passager en fonction d'un mode de fonctionnement spécifique du système CVC 1. Comme on le voit sur la Figure 2, l'ensemble formant volet 10 est reçu en rotation à l'intérieur du réservoir d'air 2. Le réservoir d'air 2 comprend une paroi intérieure tubulaire ou cylindrique 50 dont chaque extrémité est fermée par une paroi d'extrémité 51, 52. Seule la paroi d'extrémité 51 est représentée sur la Figure 2. Le moyen de couplage 28 du volet principal 20 est reçu dans un siège cylindrique prévu dans la paroi d'extrémité 51 du réservoir d'air 2.

La Figure 2 montre que la paroi d'extrémité 51 est pourvue d'une came ou d'un guide 61. La came ou le guide 61 est adapté pour recevoir la partie saillante 38 présente sur l'extérieur du volet de compression 30 (voir Figure 1). La paroi d'extrémité opposée 52 du réservoir d'air 2 comprend une came ou un guide similaire 62 (non visible) pour recevoir une partie saillante 39 qui est présente sur l'extérieur du bras 33 du volet de compression 30.

Les Figures 2, 3 et 4 montrent un déplacement de l'ensemble formant volet 10 entre différentes positions à l'intérieur du réservoir d'air 2 pour ainsi permettre l'ouverture et la fermeture sélectives d'orifices de sortie 5, 6, 7 sélectionnés du réservoir d'air 2.

En considérant tout d'abord la Figure 2, l'ensemble formant volet 10 est positionné dans une première position ou position d'extrémité dans laquelle la partie saillante 38 formée sur l'extérieur du bras 32 du volet de compression 30 est présente à une extrémité du guide 61. Dans cette première position, l'ensemble formant volet 10 est spécifiquement adapté pour obturer l'orifice de sortie de ventilation 5. Pour permettre à l'ensemble formant volet 10 d'obturer efficacement l'orifice de sortie de ventilation 5, le volet de compression 30 est poussé dans une direction radiale contre l'élément d'étanchéité 40 pour comprimer l'élément d'étanchéité 40 entre la paroi intérieure 50 du réservoir d'air 2 et l'élément de volet 31 du volet de compression 30. Cette force dirigée vers l'extérieur sur le volet de compression 30 est imposée par la forme du guide 61 et du guide correspondant 62 qui entrent en prise avec les parties saillantes 38, 39 des bras respectifs 32, 33 du volet de compression 30. On comprendra que le déplacement physique du volet de compression 30 par rapport au volet principal 20 dans une direction radiale vers la paroi intérieure 50 du réservoir d'air 2 est relativement limité. Le déplacement réel pourrait être de plusieurs millimètres ou même moins, selon le matériau sélectionné pour l'élément d'étanchéité 40. Le déplacement est adapté pour produire une pression suffisante sur l'élément d'étanchéité 40 pour mettre à l'élément d'étanchéité 40 d'obturer l'orifice de sortie de ventilation 5.

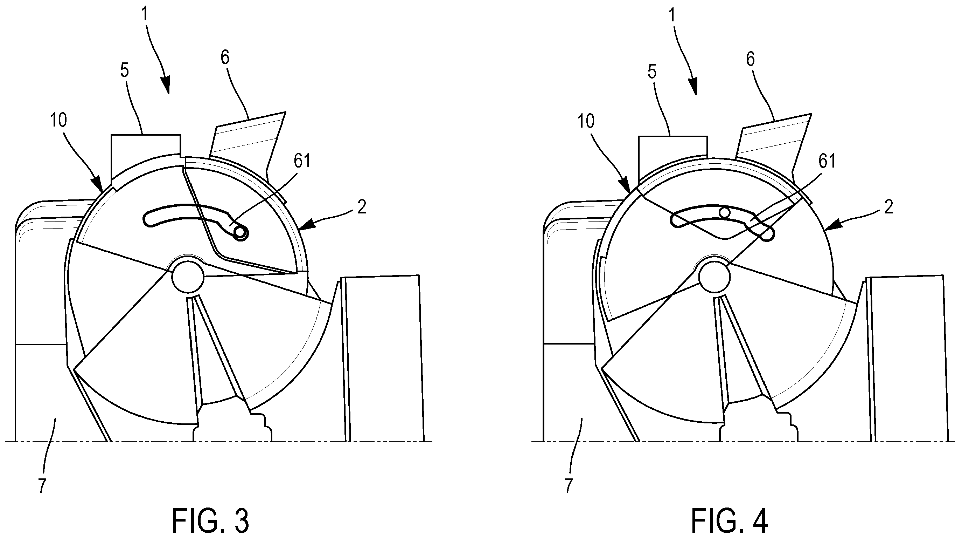

A partir de la position représentée sur la Figure 2, l'ensemble formant volet 10 est capable de se déplacer, tel que représenté sur les Figures 3 et 4, dans le sens des aiguilles d'une montre en direction d'autres positions de l'ensemble formant volet 10 à l'intérieur du réservoir d'air 2.

Sur la Figure 3, l'ensemble formant volet 10 est tourné de manière à arriver à sa position d'extrémité opposée dans laquelle l'ensemble formant volet 10 est spécifiquement adapté pour obturer l'orifice de sortie de dégivrage 6. Dans la position représentée sur la Figure 3, similaire à la position représentée sur la Figure 2, le volet de compression 30 est déplacé grâce aux guides 61, 62 en coopération avec les parties saillantes 38, 39 jusqu'à une position propre à permettre à l'élément d'étanchéité 40 d'obturer efficacement l'orifice de sortie 6.

Afin de s'éloigner des positions représentées sur les Figures 2 et 3, la forme des guides 61, 62 est déterminée de façon à permettre au volet de compression 30 d'être écarté de la paroi intérieure 50 du réservoir d'air 2. Dans le contexte de la présente description, l'expression "écarté" est utilisée pour indiquer le mouvement de l'ensemble du volet de compression 30 et de l'élément d'étanchéité 40 dans une direction s'éloignant à la paroi intérieure 50 pour provoquer une réduction de la force de contact entre l'élément d'étanchéité 40 et la paroi intérieure 50 du réservoir d'air 2. Un niveau de contact réduit aura pour effet un frottement réduit entre l'élément d'étanchéité 40 et la paroi intérieure 50 du réservoir d'air 2 pendant la rotation et ainsi un déplacement amélioré de l'ensemble formant volet 10 dans une position de non-fermeture, entre les positions représentées sur les Figures 2 et 3. Ce déplacement amélioré dû à une réduction du frottement entre l'ensemble formant volet 10 et la paroi intérieure 50 du réservoir d'air 2 permettra également une réduction du bruit provoqué par la rotation de l'ensemble formant volet à l'intérieur du réservoir d'air 2.

On comprendra que, à partir de la position représentée sur la Figure 2, l'ensemble formant volet 10 se déplacera au moins selon un angle déterminé α avec un frottement relativement élevé, afin de permettre une réduction du frottement par rapport au niveau requis pour une obturation efficace dans la position de la Figure 2, en direction d'un niveau de frottement inférieur permettant de faciliter la rotation de l'ensemble formant volet 10. De préférence, la transition depuis un niveau de frottement relativement élevé permettant une étanchéité vers le niveau de frottement relativement bas n'excédera pas un angle de rotation de 15 degrés de l'ensemble formant volet 10. Selon une forme de réalisation de l'invention, il est possible de limiter la transition d'un frottement élevé à un frottement bas à un angle de rotation de 10 degrés. Selon encore une autre forme de réalisation de l'invention, il est possible de limiter la phase de transition pour un déplacement d'un niveau de frottement relativement élevé à un niveau de frottement relativement bas à un angle de rotation non supérieur à 5 degrés de l'ensemble formant volet 10 par rapport au réservoir d'air 2.

De manière similaire, depuis la position représentée sur la Figure 3, l'ensemble formant volet 10 est capable de se déplacer vers la position représentée sur la Figure 2, tout d'abord avec un frottement relativement élevé, puis, après un certain angle de rotation α, avec un frottement réduit, afin de faciliter le déplacement. Selon la quantité d'orifices de sortie 5, 6, 7 à fermer ou ouvrir sélectivement au moyen de l'ensemble formant volet 10, entre les positions représentées sur les Figures 2 et 3, l'ensemble formant volet 10 peut effectuer un mouvement de rotation dans lequel les guides 61, 62 et les parties saillantes 38, 39 coopèrent de façon à produire une force de contact relativement élevée de l'élément d'étanchéité 40 contre la paroi intérieure 50 du réservoir d'air 2, à chaque fois que l'élément d'étanchéité 40 doit obturer un orifice de sortie 5, 6, 7, et un niveau de frottement relativement bas entre l'élément d'étanchéité 40 et la paroi intérieure du réservoir d'air 2 à des positions intermédiaires pour faciliter la rotation de l'ensemble formant volet 10 par rapport à ladite paroi intérieure 50.

Sur la Figure 4 est représentée une position intermédiaire pour l'ensemble formant volet 10, dans laquelle l'élément d'étanchéité 40 est spécifiquement adapté pour obturer les deux orifices de sortie 5, 6.

Sur les exemples des Figures 1, 2, 3 et 4, l'ensemble formant volet 10 est représenté comme ayant un volet principal 20, un volet de compression 30 et un élément d'étanchéité 40. Selon une autre forme de réalisation de l'invention, qui n'est pas représentée sur les dessins, l'ensemble formant volet 10 pourrait comprendre un volet principal 20 et un volet de compression 30 ayant une surface extérieure de l'élément de volet 31 qui est suffisamment flexible pour offrir les propriétés nécessaires pour permettre une étanchéité correcte des orifices de sortie 5, 6, 7 au moyen uniquement de l'ensemble du volet principal 20 et du volet de compression 30.

## Revendications

1. Ensemble formant volet (10) pour un système de distribution d'air d'un système de chauffage, ventilation et/ou climatisation (CVC) d'un véhicule (1), adapté pour obturer sélectivement au moins un orifice de sortie (5, 6, 7) d'un réservoir d'air (2) du système CVC (1), l'ensemble formant volet (10) comprenant un volet principal (20) adapté pour être couplé à un moyen d'entraînement pour faire tourner l'ensemble formant volet (10) à l'intérieur du réservoir d'air (2) entre une première position d'obturation de l'au moins un orifice de sortie (5, 6, 7) et une deuxième position d'ouverture de l'au moins un orifice de sortie (5, 6, 7), l'ensemble formant volet (10) comprenant en outre un volet de compression (30) adapté pour se déplacer par rapport au volet principal (20) pendant la rotation de l'ensemble formant volet (10) entre sa première position et sa deuxième position, le volet de compression (3) comprenant au moins un moyen d'actionnement (38, 39) adapté pour coopérer avec au moins un élément de guidage (61, 62) positionné à l'intérieur du réservoir d'air (2) et adapté pour entrer en prise avec l'au moins un moyen d'actionnement (38, 39), l'au moins un moyen d'actionnement (38, 39) et l'au moins un élément de guidage (61, 62) étant adaptés pour déplacer le volet de compression (30) en direction de la paroi intérieure (50) du réservoir d'air (2) dans ladite première position de l'ensemble formant volet (10) pour l'obturation de l'au moins un orifice de sortie (5, 6, 7) et pour écarter le volet de compression (30) de la paroi intérieure (50) du réservoir d'air (2) pendant au moins une partie de la rotation de l'ensemble de volet (10) de sa première position vers sa deuxième position.

2. Ensemble formant volet (10) selon la revendication 1, dans lequel le volet de compression (30) comprend un élément d'étanchéité (40) prévu sur la surface dirigée vers l'extérieur du volet de compression (30).

3. Ensemble formant volet (10) selon la revendication 2, dans lequel l'élément d'étanchéité (40) comprend un matériau flexible, tel que du caoutchouc ou du caoutchouc synthétique.

4. Ensemble formant volet (10) selon l'une quelconque des revendications précédentes, dans lequel le volet principal (20) comprend un corps principal (21) adapté pour être positionné au voisinage de la paroi intérieure (50) dans le réservoir d'air (2), le corps principal (21) étant pourvu à ses extrémités opposées d'un premier (22) et d'un deuxième (23) bras, s'étendant essentiellement perpendiculairement par rapport au corps principal (21), les bras (22, 23) comprenant un moyen de couplage (28) pour coupler le volet principal (20) à un axe de rotation.

5. Ensemble formant volet (10) selon la revendication 4, dans lequel l'élément de volet (31) du volet de compression (30) comprend à ses extrémités opposées un premier (32) et un deuxième (33) bras adaptés pour être positionnés le long du premier (22) et du deuxième (23) bras du volet principal (20), les bras (22, 23) du volet principal (20) et les bras (32, 33) du volet de compression (30) comprenant, respectivement, un ensemble de guide et suiveur de guide (24, 25 ; 34, 35) destiné à coupler à coulissement le volet de compression (30) au volet principal (20).

6. Ensemble formant volet (10) selon la revendication 5, dans lequel l'ensemble de guide et suiveur de guide (24, 25 ; 34, 35) comprend au moins un guide s'étendant radialement (24, 25), pour permettre au volet de compression (30) de se déplacer dans une direction radiale par rapport au volet principal (20).

7. Ensemble formant volet (10) selon l'une quelconque des revendications 4, 5, ou 6, dans lequel les bras (22, 23) du volet principal (20) sont en forme de part de tarte.

8. Ensemble formant volet (10) selon l'une quelconque des revendications précédentes, dans lequel ledit au moins un moyen d'actionnement (38, 39) comprend au moins une partie saillante (38, 39) adaptée pour coopérer avec au moins un guide (61, 62) prévu sur la paroi intérieure (50) du réservoir d'air (2).

9. Ensemble formant volet (10) selon la revendication 8 lorsqu'elle dépend de la revendication 5, dans lequel le premier bras (32) du volet de compression (30) comprend une première partie saillante (38) adaptée pour coopérer avec un premier guide (61) prévu sur la paroi intérieure (50) du réservoir d'air (2) et dans lequel le deuxième bras (33) du volet de compression (30) comprend une deuxième partie saillante (39) adaptée pour coopérer avec un deuxième guide (62) prévu sur la paroi intérieure (50) du réservoir d'air (2).

10. Ensemble formant volet (10) selon l'une quelconque des revendications précédentes, dans lequel le corps principal (21) du volet principal (20) comprend au moins une partie saillante dirigée vers l'extérieur (26, 27), le volet de compression (30) comprenant au moins un évidement (36, 37) pour la réception de l'au moins une partie saillante (26, 27), l'au moins une partie saillante (26, 27) du volet principal (36, 37) et l'au moins un évidement (36, 37) du volet de compression (30) étant adaptés pour délimiter le déplacement en rotation du volet de compression (30) par rapport au volet principal (20) pendant le déplacement du volet de compression (30) par rapport à la paroi intérieure (50) du réservoir d'air (2).

11. Ensemble formant volet (10) selon la revendication 10, dans lequel l'au moins un évidement (36, 37) forme un trou débouchant dans l'élément de volet (31) du volet de compression (30).

12. Système (1) de chauffage, ventilation et/ou climatisation comprenant l'ensemble formant volet (10) selon l'une quelconque des revendications 1 à 11.
